# EUROPEAN PATENT APPLICATION

(11) **EP 4 811 131 A1**
(43) Date of publication of application: **23.09.2026**
(21) Application number: 26165712.6
(22) Date of filing: 18.03.2026
(51) Int. Cl.: G06F 9/48, G06F 9/50

(54) **DISTRIBUTION OF CONTROL UNITS IN PROCESS CONTROL SYSTEMS**

(30) Priority: 21.03.2025 IN 202511025835
(71) Applicant: Honeywell International Inc., Charlotte, NC 28202 (US)
(72) Inventor: VISWANATHAN, Sethupathy, Charlotte, 28202 (US); B C, Samuda, Charlotte, 28202 (US)
(74) Representative: Haseltine Lake Kempner LLP

(57) **Abstract**

Generation of a computational time slot distribution schedule for a set of control units is described in the present application. The set of control unit represents computer processing tasks that are performed by a plurality of computer controllers included in a process control system, such as but not limited to an industrial process control system, in order to operate the process control system in a desired manner.

## Description

### TECHNICAL FIELD

This disclosure is generally directed to controllers, (with or without input/output modules), for network control systems. More specifically, to the distribution of execution units among a plurality of controller included in a control system.

### BACKGROUND

Industrial process control and automation systems are often used to automate large and complex industrial processes. In deployments of conventional network control systems, the entity which is hosting the control function and responsible for the related control calculations (such as proportional integral differential (PID) control and/or model predictive control (MPC) calculations) is typically an embedded computer device/platform, typically described as being a process "controller." Each controller comprises computing hardware generally including at least one processor or other computing device having an associated memory, such as being an embedded controller. What is referred to herein as a "controller platform" comprises one controller or a pair of controllers in the case of redundant controllers, where the controller platform hosts in its memory a control software "application module" such as the commercially available EXPERION control execution environment (CEE), marketed by Honeywell International Inc., hereafter cumulatively referred to as an Application Module (AM).

Each "controller platform" communicates in a level above at least one server over a plant-wide network, and levels below typically through an I/O network, then I/O devices, then sensors and actuators that control a portion of the processing and/or other equipment in the plant. In order to ensure a high level of control system availability, the controllers in a network control system are typically deployed in a scheme which provides hardware redundancy. Some examples use a "primary" controller which is actively executing the control mission and a "backup" controller which is on standby, ready to assume the control mission if there is a failure of the primary controller. Accordingly, traditional high availability control system redundancy uses a primary controller along with a backup controller for each controller platform, which in the simplest non-redundancy control system case consists of a single controller. Upon the failure of a primary controller in a redundant controller pair controller platform, non-redundant operation using the backup controller continues until a repair or replacement is made to the primary controller to restore the controller redundancy in the controller platform. The AMs are conventionally deployed in a ratio of 1:1 with the controller platforms. This means each controller platform whether redundant or not always hosts only one AM.

In the deployments explained above, the backup can take over on failure of a primary controller only when the backup controller it is fully synchronized to the primary controller. If the primary fails when it is not synchronized, or only partially synchronized, then the backup typical does not take over. In certain controller deployments memory retention systems using non-volatile memory or random access memory (RAM) systems are used that are retained by the primary when the AM is recovered. However, if the hardware has failed and the AM module replaced, then user intervention is required to restore the configuration.

In certain controller deployments controller platforms are coupled to one another by a private path redundancy network providing a controller pool, each controller platform having at least one controller including computing hardware and a memory. An application module (AM) pool includes a plurality of AMs, wherein the controller platforms are coupled by an input/output mesh network to input/output devices coupled to field devices, such as the EXPERION highly integrated virtual environment (HIVE) control system technology, marketed by Honeywell International Inc. Within a HIVE controller deployment loss of an unsynchronized or non-redundant primary control application requires user intervention to restore an AM configuration and state.

### SUMMARY

As used herein an industrial process facility includes field devices and processing equipment that runs an industrial process involving a tangible material that disclosed embodiments apply. The industrial process facility may operate in oil and gas, chemical, beverage, pharmaceutical, pulp and paper manufacturing, petroleum processes, electrical, and/or water systems. An industrial process facility is distinct from a data processing system that only performs data manipulations. The embodiments of the systems, apparatus, methods, and techniques for distribution of control units as described herein allow for providing resilient and user-friendly solutions to the issue of distribution of control units in a process control system.

An illustrative and non-limiting example, embodiments include as method for executing a control unit distribution algorithm, the method comprising: determining a list of tasks to be performed by a plurality of controllers included in a process control system; for each of the tasks included in the list of tasks, determine a set of control units associated with performing the task; and allocating each of the control units to one or more computational time slots based on a computational weighting of each of the control units and a set of distribution criteria to generate a time slot distribution schedule for each of the control units.

Additionally or alternatively, the method may further comprise communicating to the plurality of controllers the time slot distribution schedule; and configuring the plurality of controllers to operate the process control system using the allocation of the time slot distribution schedule. Additionally or alternatively, the method may further comprise wherein at least one of the set of distribution criteria comprises a cascade data flow requirement that exists between two or more controllers of the process control system. Additionally or alternatively the method may further comprise wherein at least one of the set of distribution criteria comprises a priority of data flow criteria. Additionally or alternatively, the method may further comprise wherein at least one of the set of distribution criteria comprises the central processing unit (CPU) resource needs of each controller in the process control system.

Additionally or alternatively, the method may further comprise wherein at least one of the set of distribution criteria comprises latency restrictions for generating output modules. Additionally or alternatively, the method may further comprise wherein at least one of the set of distribution criteria comprises an input/output subscription rate. Additionally or alternatively, the method may further comprise wherein at least one of the set of distribution criteria comprises a redundancy traffic and watermark level. Additionally or alternatively, the method may further comprise wherein the computational weighting of each of the control units comprises: for each of the control units individually, determining a value for the computer resource time needed to perform the control unit. Additionally or alternatively, the method may further comprise wherein allocating each of the control units to one or more computational time slots further comprises: allocating each of the control units to the one or more computation time slots so that all latency requirements are met for performing each of the tasks included in the list of tasks to be performed by a plurality of controllers.

In another illustrative and non-limiting example, embodiments include an apparatus comprising: a computer system comprising a processor configured to execute a control unit distribution algorithm, the control unit distribution algorithm, when executed by the processor, is configured to: determine a list of tasks to be performed by a plurality of controllers included in a process control system; for each of the tasks included in the list of tasks, determine a set of control units associated with performing the task; and allocate each of the control units to one or more computational time slots based on a computational weighting of each of the control units and a set of distribution criteria.

Additionally or alternatively, the apparatus may include wherein at least one of the set of distribution criteria comprises a cascade data flow requirement that exists between two or more controllers of the process control system. Additionally or alternatively, the apparatus may include wherein at least one of the set of distribution criteria comprises a priority of data flow criteria. Additionally or alternatively, the apparatus may include wherein at least one of the set of distribution criteria comprises the central processing unit (CPU) resource needs of each controller in the process control system. Additionally or alternatively, the apparatus may include wherein at least one of the set of distribution criteria comprises latency restrictions for generating output modules.

Additionally or alternatively, the apparatus may include wherein at least one of the set of distribution criteria comprises an input/output subscription rate or a redundancy traffic and watermark level. Additionally or alternatively, the apparatus may include wherein the processor is further configured to: control the operation of a communications unit to cause the communications unit to communicate, to the plurality of controllers, the time slot distribution schedule, wherein the time slot distribution schedule is configured to control the processing of the control units as performed by the plurality of controllers based on time slot distribution schedule.

In another illustrative and non-limiting example, embodiments include a non-transitory, computer-readable medium including instructions that when executed by a processor causes the processor to: determine a list of tasks to be performed by a plurality of controllers included in a process control system; for each of the tasks included in the list of tasks, determine a set of control units associated with performing the task; and allocate each of the control units to one or more computational time slots based on a computational weighting of each of the control units and a set of distribution criteria.

Additionally or alternatively, the non-transitory, computer-readable medium may include wherein the computational weighting of each of the control units comprises: for each of the control units individually, determining a value for the computer resource time needed to perform the control unit. Additionally or alternatively, the non-transitory, computer-readable medium may include wherein the set of distribution criteria includes criteria directed to cascade data flow, priority of data flow, resource needed, latency optimization, input/output subscription rate, and redundancy traffic/watermark levels.

### BRIEF DESCRIPTION OF THE DRAWINGS

For a more complete understanding of this disclosure, reference is now made to the following description, taken in conjunction with the accompanying drawings. The figures, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.
FIG. 1 is a block diagram of a network process control system for an industrial process facility, in accordance with various embodiments.
FIG. 2 illustrates a flow chart of a method for determining time slot allocation for control units, in accordance with various embodiments.
FIG. 3A is an illustrative diagram depicting a set of control units having inter dependencies between them for performing control unit tasks, in accordance with various embodiments.
FIG. 3B is an illustrative diagram showing a distribution of the plurality of control units from FIG. 3A to a single time slot, in accordance with various embodiments.
FIG. 3C is an illustrative diagram showing a distribution of the plurality of control units from FIG. 3A to multiple time slots, in accordance with various embodiments.
FIG. 3D is an illustrative diagram showing another distribution of the plurality of control units from FIG. 3A to multiple time slots, in accordance with various embodiments.
FIG. 4A illustrates an interactive graphical user interface, in accordance with various embodiments.
FIG. 4B illustrates an interactive graphical user interface, in accordance with various embodiments.
FIGS. 5A-5E illustrate various graphical depictions related to the process control system that can be generated and displayed on a display device, in accordance with various embodiments.
FIG. 6 illustrates a block diagram depicting an example computer system, in accordance with various embodiments.

### DETAILED DESCRIPTION

Modern process control systems, such as process contorl systems used for industrial plants, include hundreds and even thousands of individual embedded controllers that are networked together to form a control network or control platforms for providing control over the devices included in the process control system. Theses process control systems, having large numbers of embedded controllers, will have thousands of tasks and algorithms to run in order to provide proper control and operation of the devices including in the system. Tasks to be performed by the system include but are not limited to interface with Input/Output (IO) sensors, data acquisition and calculations, and providing control over actuators included as part of field devices included in the system. Control units are provided within the system to execute the tasks and algorithms used to operate the system, and to gather data related to the operation of the system, such as quality control and production information. Each control unit is configured with a set of parameters for operating in the embedded system, including parameters related to which time slot(s) the control unit needs to be executed within, and for example a frequency of execution of the control unit, for example when tasks requiring the use of the control unit need to be performed on a continuous basis, or for example on an iterative but intermittent basis.

Existing control processor managers may provide execution of control units, also referred to as control objects or execution units, using time slices (Execution slots) of computational power, enhancing efficiency to a degree. However, this method is susceptible to overloading during individual time slices, resulting in compromised control quality and poor utilization of the processor time slices. Control application engineers currently have two main distribution strategies: manually spreading control units over execution slots or opting for an automatic approach. Often, engineers blend the two methods due to specific application needs. Presently, distribution among execution units is sometimes implemented via a straightforward count, causing phase overloads requiring manual intervention. Additionally, any download operation can alter the distribution, potentially leading to unexpected system behavior.

Current control systems, including Distributed Control Systems (DCS), do not facilitate load distribution automatically, relying instead on manual control engineering, leading to latency, reliability issues, and Control Execution Environment (CEE) overruns. This is particularly complex in fields like batch processing and life sciences, where resource usage during load distribution is critical. For example, in the life science industry, numerous Master recipes are executed to manage control recipes, resulting in the dynamic creation of multiple activities. This complexity makes it exceedingly difficult for an engineer to anticipate the load on the control processor when multiple master recipes are active in the production environment. Recovery from such issues typically requires reengineering the control loops or transferring control strategies to an unplanned additional controller, often resulting in unplanned expenses.

The existing control distribution mechanisms for distributing control units within a control system incurs some or all of the following drawbacks:
- Control units are distributed individually without considering the interdependency and cascade data flow. This results in poor control response time though the controller has high computer processing unit (CPU) availability, and the control strategies are executed at higher frequency;
- To achieve faster response time, a user often tend to fast schedule the control units to overcome the incorrect sequencing, which results in unnecessarily high CPU consumption and increase the overall solution cost;
- Since the control unit's execution slot is determined at run time based on controller dynamics, it is not always guaranteed to get the same response time between subsequent operations like Online Process Migration, Freeze and switchover;
- The impact the control unit is going to create on the next subsequent CPU slot (Like Redundancy clean point load) is not considered, resulting in uneven CPU resource utilization and overruns;
- Input/Output (IO) Module scan rate is never considered in determining the Control unit execution rate, which could result in faster IO with slower control and Slower IO with faster control;
- Peer subscriptions are done without knowing the actual data consumer periodicity, on execution resulting in faster or slower subscription;
- Redundancy threshold limits might be hit for certain configurations;
- IO loop latency and cascade loop latency data not available for review holistically during factory acceptance test, which results in late changes and re-testing during commissioning; and
- Manually handling all the above said issues is time consuming and involves labor cost.

The embodiments for distribution of control units as further described below provide solutions that overcome these identified deficiencies with an improved algorithm that accounts for all relevant factors, such as data flow cascades, execution priority, resource requirements, latency minimization, redundancy traffic, and IO subscription rates, to define a control unit distribution before it is downloaded to the controllers. Benefits of the techniques for optimal distribution of control units as further described below include:
- Equitable Resource Distribution: By implementing load balancing, the control unit distribution of the present application ensures that tasks related to computing and control are evenly spread throughout all processes within the controller. This avoids overruns in control processors and reduces latency delays, which boosts system performance and efficiency;
- Reduced Latency: Load balancing leads to faster response times by organizing data dependencies across various control elements. This is especially crucial in industrial environments where timing is key, as any delay can result in operational inefficiency;
- Operational Cost Savings: The new solution allows for more efficient allocation and use of resources, leading to significant cost reductions. This encompasses energy savings, a decrease in additional hardware needs, conserving cabinet space, and lowering maintenance costs;
- Algorithmic Efficiency: Implementation of optimization algorithms enhances process streamline and control strategy effectiveness. This includes refining control loops, reducing necessary computational work (execution frequency determined by latency demands), and improving the preciseness of algorithms;
- Improved Resilience: Control systems with balanced workloads have an increased capacity to manage unexpected workload spikes, ensuring steady and dependable operations;
- Scalability: As entities or areas grow, the control system adapts and scales effectively through load balancing. It allows for the addition of new control processors and dynamic redistribution of control units to handle greater loads without loss of performance;
- Resource Management: By implementing efficient load balancing, resources are used optimally, avoiding both overprovisioning and underutilization that might incur unnecessary expenses; and
- Maximized Utilization: Employing optimization techniques guarantees full exploitation of all resources at hand. This involves precise allocation tuning of control units and resources, including communication and I/O, to preclude waste and guarantee optimal throughput.

Addition benefits of the use of the methods and techniques for distribution of control units as described below include capability that:
- Reduces CAPEX and OPEX as it avoids additional cost of controllers during System Acceptance Test.
- Reduce Project Cycle time for customers.
- Entry level and novice engineers and technicians will be able to do optimal control distribution with less of a minimal learning curve.
- Brings in transparency and efficiency.
- Acceptance increases than current.
- Deep learning and re-enforcement models ensure of upkeep of the latest and enhance identification criteria.

The embodiments of the systems, apparatus, methods, and techniques for distribution of control units as described herein are configured to enhance operational efficiency in handling and executing complex control logic, and for providing top performance, dependability, and scalability through an innovative approach incorporating advanced analytics-driven deep learning of optimal distribution needs.

The embodiments of the systems, apparatus, methods, and techniques for distribution of control units as described herein allow for providing resilient and user-friendly solutions to the issue of distribution of control units in a process control system. By leveraging deep learning technologies, it allows comprehensive collection of variables for ideal distribution, offering valuable insights to the application engineer for improved decision-making and simplification of processes. Application engineers can now access control units' distribution within the execution time slot at build time instead of post-deployment in production, a feature not yet available with existing tools that also aids in avoiding control processor overloads and delays. The growing intricacy and size of industrial control tasks necessitate efficient methods for managing computational loads, coordinating communication, and refining performance among distributed controls, highlighting the importance of load balance and optimization.

This solution is applicable in both greenfield projects (projects starting from scratch), and the existing customer installations. In the existing install base, the algorithm employed by the systems, apparatus, methods and techniques of the present application, once deployed, will provide the control distribution insights and flags the deviation which can be auto corrected on user acknowledgement. The systems, apparatus, methods, and techniques as described herein provide an improvement to the field of process controls and to the operation of computer systems that include processors configured to operate process control systems by providing improved methods and techniques for the allocation and distribution of control units that are used by controllers of the process control system to perform tasks and to properly operate the process control system. Use of the control unit distributions as determined using the systems, apparatus, methods, and techniques as described herein represent a practical application, and an improved solution, to the issue of allocating control units in an optimal and efficient matter. Further, the embodiments for generating control unit distributions as described herein are versatile in that the methods and techniques are compatible for immediate integration with existing controllers and existing programmable logic controllers, and the system that utilize these devices, and aligns seamlessly with the architectural design of existing controllers, particularly in terms of resource definition and application layout.

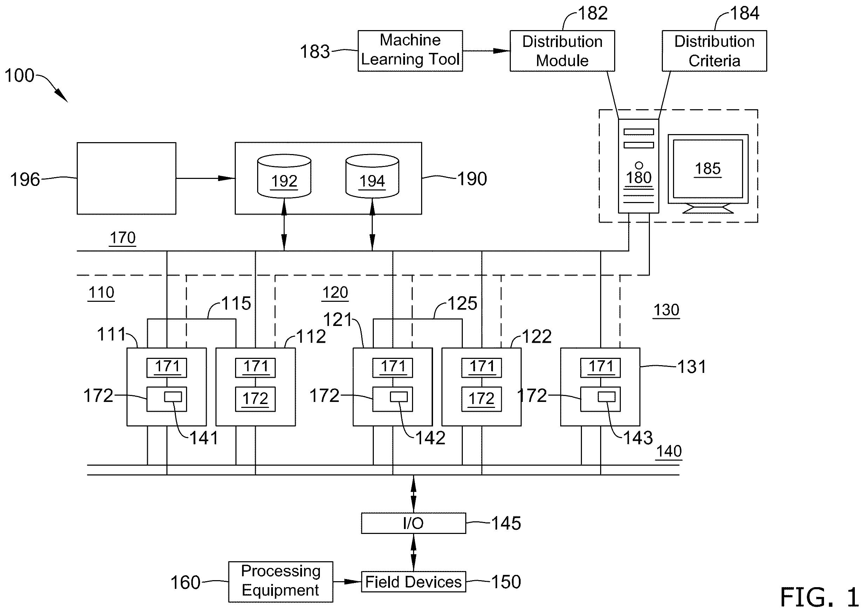

FIG. 1 is a block diagram of a process control system 100 for an industrial process facility (IPF), in accordance with various embodiments. In system 100, controller platforms in the process control system include platforms 110 and 120 with redundant controllers, with each controller platform having a controller pair 111, 112 and 121, 122, respectively, and one controller platform 130 being a single (non-redundant) controller 131. Each controller includes computing hardware 171 and an associated memory 172.

. The controller platforms 110, 120, 130 are each shown coupled by an input/output (I/O) network 140 for controlling a portion of the processing equipment 160 shown as being coupled through I/O devices 145 to field devices 150, which comprise sensors and actuators associated with various ones of the processing equipment 160. There is also shown a plant wide network 170 (e.g., such as an Ethernet network) between the controller platforms and server(s) 180, and at least one Human-Machine Interface (HMI)185.

The controllers in redundant controller pairs 110 and 120 platforms are shown coupled to one another by a first private path 115 coupling controllers 111 and 112, and a second private path 125 coupling controllers 121 and 122. Although shown in FIG. 1 as having five controllers, is would be understood that system 100 may include hundreds or even thousands of controllers, coupled together through various networks, including plant-wide network 170 and/or I/O network 140, with additional networks, network switches, and other networking devices (not specifically shown in FIG. 1), forming the process control network for system 100, as would be understood by one of skill in the art.

As shown in FIG. 1, a dedicated (fixed) AM is stored (resides) in one of the respective memories 172 of each of the controller platforms as AM 141 in memory 172 of controller 111. An AM 142 which is analogous to AM 141 provides an AM for the primary controller 121 and a backup AM for the redundant controller 122, and an AM 143 provides an AM for controller 130, which can be an AM for only a primary controller, or an AM for a primary controller and backup AM for a redundant controller. When redundant controller platforms shown as redundant controller 110 and redundant controller 120 are configured as in FIG. 1, the primary controller and backup controller can change roles with the backup controller becoming the primary controller when the primary controller is disabled so that the dedicated AM for the controller platform can support a different controller. However, as a result of this changeover, a reallocation of computational task, and/or control units used to perform the computation task, may be required in view of the potential loss of computational power resulting from the failure of a controller or a group of controllers. In addition, in instances where a failed controller, for example a failed primary controller is brought back on-line, this changeover may also require reallocation of computational task, and/or control units used to perform the computation tasks in view of the potential additional availability of computational resources added by bringing the failed controller back on-line.

As shown in FIG. 1, system 100 includes a storage appliance 190 connected to the plant wide network 170. Storage appliance 190 includes two or more data storage devices 192 and 194, which includes memory devices containing backup applications stored in these memory devices. In various embodiments, one both of storage devices 192, 194 store data including a listing of all the tasks that are either running on system 100, or are stored for use at some time by any or all of the controllers included in system 100. Storage devices 192, 194 may further store data related to a distribution of control units that are to be run on some combination of the controllers included in system 100 according to a time slot allocation for each of the control units. In various embodiments, the stored data related to the distribution of control units, and the allocation of time slots for performing the operations required to execute each of the control units, are generated as an output provided by distribution module 182 using the algorithms for determining the distribution of these control units into computational time slots based on the distribution criteria 184 and computer resource weighting, as further described herein. An electrical power source 196, which may be configured as a primary power source or as a backup/emergency power source, is coupled to the memory devices included in storage appliance 190, and in some embodiments may also provide electrical power to server 180 and/or to HMI 185.

In various embodiments, the storage appliance 190 is comprised of persistent memory devices, which represent any structure(s) capable of storing and facilitating retrieval of information (such as data, program code, and/or other suitable information on a temporary or permanent basis). The storage appliance 190 memory devices may also use random access memory RAM or any other suitable non-volatile memory device(s) that can store and retrieve information. Preferably the storage appliance 190 may contain one or more components or memory devices supporting longer-term storage of data, such as a hard drive, solid-state drives, or optical disc.

In operation, distribution module 182 is configured to receive a list of tasks that need to performed in order to provide control over the processing equipment 160, field devices 150, I/O devices 145, and the controllers included in system 100. The list of tasks may be received from storage device 190, such as data storage devices 192 and/or 194, or may be resident on a memory device internal to server 180. Server 180 also includes stored data relate to a rule-based set of distribution criteria 184, which are used as a basis for allocating control units for execution in order to perform the list of tasks the need to be performed by system 100. Using the machine learning tool 183 available at the server 180, and based on the rule-based distribution criteria 184, distribution module 182 executes programming, using computer circuity included in server 180, to execute machine learning tool 183 and thereby determine time slot allocations for each of the control units, including using a weighting of the computer resource time needed to perform each of the control units. The output results provided by the distribution module 182 includes the time slot allocation for each of the control units, which may be referred to as a time slot distribution schedule. The time slot allocations may be communicated, for example though the plant-wide network 170, to the controllers included in system 100 so that each controller may then be configured to operate on the control units, and to perform the task(s) assigned to that controller and associated with a set of control units, using the time slot allocations for the control units as generated by the distribution module 182.

In various embodiments, distribution module 182 may execute the programming related to distribution of control units on a continuous basis, or based on some predetermined time interval, such as every 1 to 10 seconds, in order to monitor system 100 for a controller failure, and for example to monitor for instances where a controller fails and operations normally performed by the primary controller are taken over by a paired backup controller. In such instances, distribution module 182 may execute programming in order to reallocate the execution of control units to different time slots and/or to different controller(s) in order to maintain optimal performance of the system despite and in view of the failure of a controller or a group of controllers within system 100.

In various embodiments, distribution module 182 may execute the programming related to distribution of control units when a new controller, a new controller platform, and/or additional devices, such as additional I/O devices, field devices, and/or processing equipment are being incorporated into system 100. In various embodiments, distribution module 182 may execute the programming related to distribution of control units when an existing controller, an existing controller platform, and/or additional devices, such as additional I/O devices, field devices, and/or processing equipment are currently operational within system 100 are being taken off line, either temporarily or permanently. In such instances, distribution module 182 may execution programming in order to reallocate the execution of control units to different time slots and/or to different controller(s) in order to maintain optimal performance of the system in view of the changes being made to system 100.

In various embodiments, system 100 is being implemented from scratch (i.e., a greenfield implementation). In such instances, all of the I/O devices, field devices, and processing equipment, along with the controllers coupled to these devices, have not yet been operated at all, or have not been operated in a fully operational configuration. In such instances, distribution module 182 may execute programming in order to provide an initial allocation the execution of control units to computational time slots and various controllers of system 100 in order to obtain, at least initially, optimal performance of the system during the startup procedure.

In various embodiments, distribution module 182 is configured to determine the distribution of the control units across the computational time slots based on at least one, some, or all of the six criteria as further described below.
1. Cascade data flow:
   A control unit may depend on data from other control unit, For example, controller 1 exchanges data with controller 2. In such scenarios, the data provider unit must execute first, followed by data consumer unit. If these execution are done in incorrect order it will result in the data consumer unit consuming data which was generate in previous execution in a delayed manner resulting is slower response. This criteria may be needed to manage how frequently the data flows between the two controllers. Process map of the controllers, inputs, and outputs, provides the needed data.
2. Priority of Data flow:
   There could be cyclic references of data. For example, control unit 1 output is used as an input to control unit 2, control unit 2 output is used as input to control Unit 3, and control unit 3 output is used as a control unit 1 input. In this case, the control unit that depends on I/O data will be given the highest precedence. If all the units have physical I/O signal dependency, then user intervention will be sought. This criteria may be needed to understand the sequence of operations in the control units - so each control unit needs to be operating on correct data sets.
3. Resource Needs:
   The CPU resource needs for every control unit will be automatically analyzed in the trainer system and the derived coefficients will be used as a starting value for the estimating factor. Further fine tuning of the coefficients will be done when learning mode is enabled in the production system as part of continuous learning and improvement. The impact of a control unit to the next immediate cycle will also be considered in arriving at the optimum distribution. Time is divided into slots, such as but not limited to time slots of 50 to 100 milliseconds, inclusive. Each time slot can be filled with assigned control units that yield a % of CPU availability as a parameter of the system output. This is a parameter may be estimated by the artificial intelligence (AI) or machine learning tool based on prior experience with like tasks in other plants, and then becomes a part of the ongoing learning as the Plant executes processes.
4. Latency optimization:
   Latency is the time from input change to the output changing. This is a goal of the process and is entered by a user, such as the Plant Engineer. The control units will be placed such that the final screw to screw latency will be very minimal. This is the top decision-making factor in deciding the optimal sequencing and distribution of the control units into a respective set of time slots.
5. IO Subscription rate:
   Output of this analysis includes determining the optimized I/O subscription rate that allows the process to execute on each new sample input. A general rule followed in control systems is to execute the control units at a rate that is twice slower than I/O Scan rate. For example, if the I/O scan rate is 100 milliseconds, the control unit executing at 200 milliseconds would deliver the control output with less jitter. Hence, the control unit time slot distribution can take into consideration the IO channel/module scan/subscription period.
6. Redundancy Traffic and Watermark Level:
   Controllers (primary and secondary) need to exchange state information so that secondary controller knows whether or not the primary controller is operating. The redundancy traffic generated by each control algorithm would be used to determine the redundancy traffic in bytes generated on the wire, and the same can be used to optimize without hitting watermark (maximum threshold that can be handled by the other subsystem) limit.

The above criteria would be considered when distribution module 182 executes the algorithm to arrive at optimal sequencing and distribution of control units across CPU resource time slots during the configuration time itself, thus controlling the non-deterministic execution of control units due to runtime load balancing. This approach integrated into engineering tools, which is used to configure the control units, may be executing in various modes. A first mode, (Mode 1), executes whenever a new control unit is created. This is to arrive at initial sequencing and distribution. This mode will also enable optimal sequencing and distribution during live expansion while expanding the plant operations (Brown field expansions). A second mode, (Mode 2) may be executed once all the control units to be executed under a controller are finalized. This analysis tool can be run cumulatively on all control units to readjust the slot distribution relatively (Green field projects).

This algorithm executed by the distribution module 182 may be configured to create a graphical view of the control units ordering and estimate the IO loop latency, cascade loop latency, and execution sequences based on tag names etc. This graphical presentation would ease the manual reviews and simulated timing data would help in estimations. Based on an optimized control unit distribution, the tool can also suggest the best subscription rate for peer subscriptions. This would help to avoid over and under subscriptions. Likewise, for the six criteria listed above, 6 permutations of distribution is possible which would involve excessive cost and may be error prone if done manually. This demands the need for automating this procedure applying on latest technologies, for example the use of machine learning, for example using machine learning tool 183, which may also employ neural networks with or without the use of hidden layers.

Embodiments of system 100 may include use of a control builder graphical user interface (control builder GUI). The control builder GUI allows drag and drop from a library of tasks. Each task can be tailored then be tailored. The task has an assigned CPU weightage, indicating how much CPU capacity is used by a given task. The objective of the control builder GUI is to optimize latency using distribution of resource utilization, and thereby avoid overbuilding hardware. For example, in a Brownfield application (existing system), the user may run the control builder tool to determine whether there is remaining capacity in the build, and what modifications / parameters will need to trade off (if any). In a Greenfield application (new process control system), run control builder tool to estimate how many controllers are needed to achieve the desired latency with balanced design. In various embodiments, a user picks a constraint and the tool configures from there to achieve a selected set of performances from the process control system.

In order for optimize to distribution of control units across the available computational time slots, one key parameter needed is CPU weightage of the control unit. The CPU weightage of individual elements in a control unit can be arrived at lab system measurements. Such measurements would serve as a good basis to start with, but lab readings will not always be accurate when deployed in an actual site scenario. In order to arrive at a more accurate distribution, one or more supervised learning models may be employed to continuously monitor the CPU usage of control unit elements, and to refresh the CPU weightage based on the monitored CPU usage. The data dynamics like new input data, stale data, unexpected data etc., on which the control units operate, can be accounted for as part of supervised machine learning algorithms which can be done both on live systems or on a simulation system. This will also account for release to release dynamics and enhancements.

As an example, for a given control unit, the CPU usage on stale data may be 100 processing units, when new input data comes the CPU usage could be 120 processing unit, when on error or unexpected process condition occurs the processing unit might be 80 processing units. This variation is due to the execution path in the code based on the data. The CPU weightage must be derived considering all variation aspects in order to come up with stable controller behavior at runtime without any occasional overloads.

In some embodiments, the machine learning tool, such as a Random Forest Algorithm, would be integrated into other tools, such as the distribution module 182, and can execute without impacting the performance of an embedded controller. This provides the CPU weightage prediction by combining multiple classifiers. Tables 1-3 below are examples some of the useful reports that can be generated using this monitoring process.

**TABLE 1**

| **LATENCY ESTIMATION** | | |
|---|---|---|
| **Input** | **Output** | **Estimated Latency(MS)** |
| 11 | O1 | 900 |
| 12 | O2 | 300 |
| 13 | O3 | 150 |

**TABLE 2**

| **ESTIMATED SLOT LOAD** | | |
|---|---|---|
| **SLOT** | | **PERCENTAGE** |
| 1 | | 80 |
| 2 | | 65 |
| 3 | | 34 |
| 4 | | 25 |
| 5 | | 78 |
| 6 | | 54 |
| 7 | | 72 |
| 8 | | 21 |
| 9 | | 15 |
| 10 | | 43 |

**TABLE 3**

| **ESTIMATED REDUNDANCY TRAFFIC** | | |
|---|---|---|
| **SLOT** | | **KBPS** |
| 1 | | 1000 |
| 2 | | 700 |
| 3 | | 800 |
| 4 | | 1200 |
| 5 | | 900 |
| 6 | | 769 |
| 7 | | 1500 |
| 8 | | 244 |
| 9 | | 590 |
| 10 | | 600 |

In addition, the reports can include the slot execution order and the sequencing of controls units as further illustrated in the figures described below.

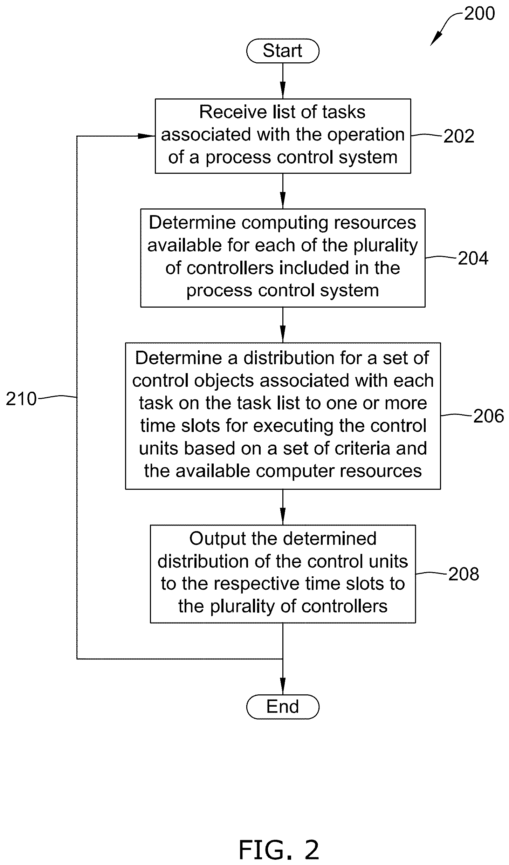

FIG. 2 illustrates a flow chart of a method 200 for determining time slot allocations for control units, in accordance with various embodiments. In some embodiments, the operations described for method 200 may be performed by computer circuity, such as a processor or a set of processors, which may be included in a server such as server 180 (FIG. 1) or another computer system, such as computer system 900 (FIG. 9).

Embodiments of method 200 include receiving, from a computer memory device, a list of tasks associated with the operation of a process control system (block 202). The process control system includes a plurality of controllers configured to perform the tasks associated with the operation of the process control system. The list of tasks may include task are currently being performed, and/or that are not currently being performed by the plurality of controllers, such as in a new and not yet operational process control system.

Embodiments of method 200 include determining the availability of computing resources available for each of the plurality of controllers included in the process control system (block 204). The determination of the computing resources available may be made for example by monitoring the CPU activity of controllers operating in a process control system, and/or based on modeling of the process control system.

Embodiments of method 200 include, for each of the tasks, allocating a set of control units associated with the task to one or more time slots for executing the control units based on a set of criteria (bock 206). In various embodiments, the set of criteria include, one, some, or all of the six criteria described above, including but not necessarily limited to: cascade data flows, priority of data flows, computational resource (CPU) needs, latency optimization, I/O subscription rates, and redundancy traffic/watermark levels. In various embodiments, the allocation is performed by an algorithm including as part of a distribution module, such as distribution module 182 (FIG. 1), and may utilize a matching learning tool, such as machine learning tool 183 (FIG. 1).

Embodiments of method 200 include outputting, to the plurality of controllers, the allocation of the control units to the respective computational time slots during which the control units are to be executed by one or more of the plurality of controllers (block 208). In various embodiments, outputting of the allocation of the control units may include generating and displaying one or more graphical depictions of the allocations and/or other data related to parameters associated with the computational aspects, either actual or desired, related to the operation of the process control system.

Embodiments of method 200 may include repeating the method steps as depicted by blocks 202, 204, 206, and 208, as illustratively represented by dashed line and arrow 210. In various embodiments, method 200 repeats the execution of the procedure for allocating the control units to respective computational time slot(s) on a continuous basis, for example at some predefined time interval. In some embodiments, method 200 is triggered to execute the method steps as depicted by blocks 202, 204, 206, and 208 based on a triggering event. A triggering event may be but is not limited to detection of a failure of a controller or a group of controllers included in a process control system, detection of an addition of a new controller or a new group of controller, and/or a change to an operational procedure that is programmed into one or more of the controllers included in the process control system.

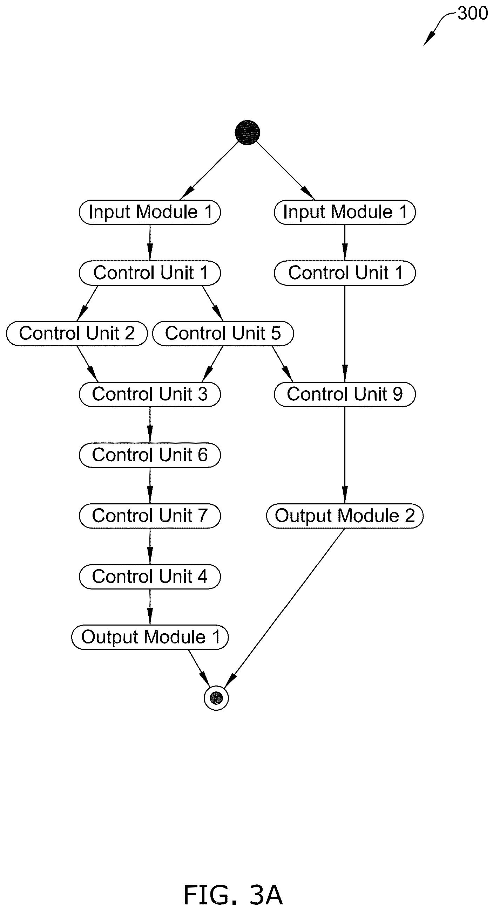

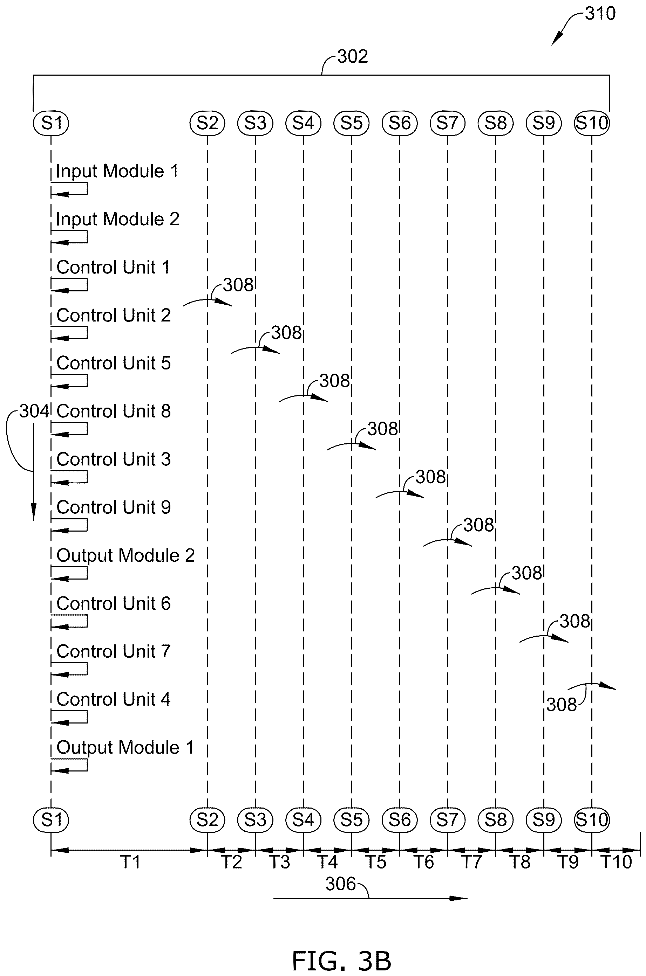

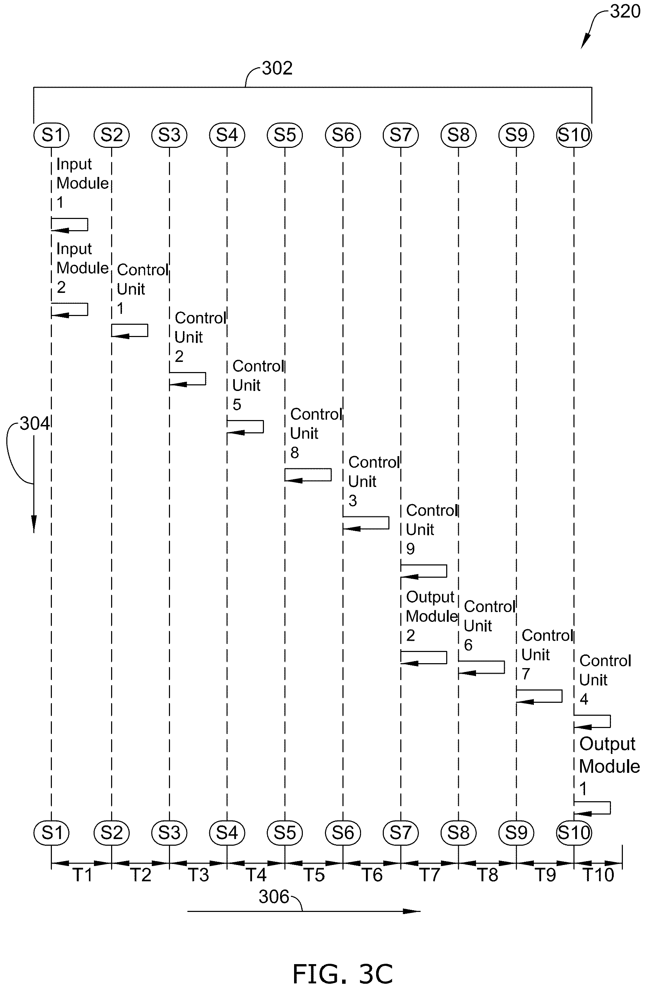

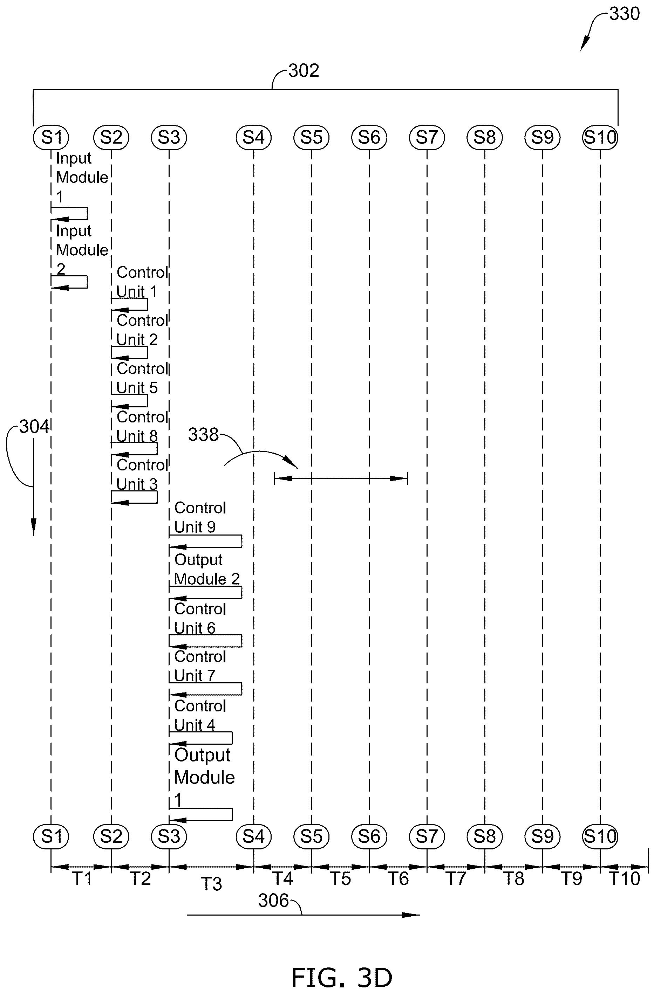

FIG. 3A illustrates a block diagram 300 depicting a set of control units having inter dependencies between them for performing control unit tasks, in accordance with various embodiments. As shown in FIG. 3A, a first input module 1 and a second input module 2 need to be operated on by the plurality of control units 1-9, illustratively represented in FIG. 3, in order to produce outputs including a first output module 1 and a second output module 2. The first input module 1 may include a process task that needs to be performed in order to generate the first output module 1 within a first particular time frame in order to provide the output information included in output module 1, for example data and/or control parameters, at an acceptable rate in time. Similarly, the second input module 2 may include a process task that needs to be performed in order to generate the second output module 2 within a second particular time frame in order to provide the output information included in second output module 2, for example data and/or control parameters, at an acceptable rate in time.

In various embodiments, the first time frame may be equal to the second timeframe, but in various embodiments the first timeframe and the second time frame are different in length. In addition, the processing required to arrive at the generated first output module 1 and the second output module 2, in addition to be required within different time frames, may also have data interdependencies, which may require data generated at one or more of the intermediate steps to be provided as an input to one or more subsequent steps in the processing required to generate output module 1 and/or output module 2.

As shown in FIG. 3A, control unit 1 begins processing using inputs from first input module 1. In various embodiments, at a same time control module 2 begins processing using inputs from second input module 2. The outputs from control unit 1 are passed to both control unit 2 and control unit 5, while the outputs from control unit 8 are passed to control unit 9. To proceed with further processing, control unit 9 requires further inputs from control unit 5 before it can generate outputs comprising the second output module 2. However, because control unit 5 is processing the inputs from control unit 1 to generated the additional inputs needed by control unit 9 while control unit 2 also processing the output received from control unit 1, the delivery of the additional outputs to control unit 9 may be available to control unit 9 much sooner in time than compared to a scenario where control unit 2 was performing all of the processing of the inputs received from control unit 1. Once the outputs from control unit 5 are received by control unit 9, control unit 9 can complete the processing required to provide output module 2.

In addition, once the outputs from both control unit 2 and control unit 5 have been received at control unit 3, further processing proceeds to ultimately generate the first output module 1, including: control unit 3 processing the inputs from control units 2 and 5 to provide outputs to control unit 6, control unit 6 processing the outputs from control unit 3 to provide outputs to control unit 7; control unit 7 processing the outputs from control unit 6 to provide outputs to control unit 4; and control unit 4 processing the outputs from control unit 7 to provide output module 1. Due to the additional control units required to generate output module 1 compared to the number of control units required to generate output module 2, the generation of output module 2 should proceed within a shorter time frame relative to the time required to generate output module 1 when the processing time required for each control unit is equal. However, the interdependency of control unit 9 on outputs from control unit 5 creates an interdependency, and therefore a time frame relationship, between the overall processing times need to generate output module 1 and output module 2 when considered from a same starting point in time.

Using the algorithms and the criteria as described herein, the available controller resources included in a process control system, such as system 100 (FIG. 1), can be scheduled to perform the required processing on the first input module 1 to generate the output module 1 while simultaneously operating on the second input module 2 to generate the second output module 2 using scheduled time slots to efficiency distribute the control units 1-9 in order to assure that both the first output module 1 and second output module 2 are delivered within the required timeframes for each of these outputs. Without the use of the scheduling and distribution of the control units 1-9 using the algorithm and based on the criteria as described above, the processing depicted in diagram 300 may by default be performed in a strictly serial manner, for example with a single controller or a set of controllers performing only one processing procedure related to either generating output module 1 or generating output module 2, and as a result these outputs may not be able to be generated within the required time frames for one or both of the output modules.

There are numerous ways of scheduling the above set of control units based on the six criteria listed above. For example, in scenarios where enough controller resources are available, the processing of both input module 201 and 202 to completion could be performed in one predefined time slot, for example a period of time having a predefined length, such as but not limited to 100 milliseconds. In other instances, for example where adequate controller resources may not be available to perform all of the required processing of both input module 201 and input module 202 to completion within a single time slot, the algorithm and criteria as described herein are configured to allocate the processing task to one or more controllers using one or more controllers in order to generate the required outputs within the required time frames for each of these outputs. FIGS. 3B-3D illustrate and describe some of the alternative arrangements for allocating control units to multiple time slots based on the above described criteria and latency requirements of a plurality of control units that need to be processed by the controllers included in a process control system.

FIG. 3B is an illustrative diagram 310 showing a distribution of the plurality of control units from FIG. 3A to a single time slot, in accordance with various embodiments. Diagram 310, includes a sequence of time slots, represented by vertical dashed lines, and indicated as time slots S1, S2, S3, S4, S5, S6, S7, S8, S9, and S10, as generally indicated by bracket 302. Time slots S1-S10 are arranged sequentially in time from left to right, as illustratively represented by arrow 306, starting at time slot S1 and extending to time slot S10. Each of time slots S1-S9 are separated from one another by one of time periods T1-T9, respectively, as illustratively represented by a respective one of time periods T1-T9 along the horizontal axis of the diagram. As shown in diagram 310:
- S1 is separated in time from S2 by time period T1;
- S2 is separated in time from S3 by time period T2;
- S3 is separated in time from S4 by time period T3;
- S4 is separated in time from S5 by time period T4;
- S5 is separated in time from S6 by time period T5;
- S6 is separated in time from S7 by time period T6;
- S7 is separated in time from S8 by time period T7;
- S8 is separated in time from S9 by time period T8; and
- S9 is separated in time from S10 by time period T9.
- A time period T10 extends after (to the right) from S10.

In various embodiments, each of time periods T1-T10 are a same length time period, for example but not limited to a time period of 100 milliseconds. In various embodiments, the length of each of the time periods T1-T10 may be predefined and/or adjusted based on user inputs to the system, as further described below. As shown in diagram 310, all of the control units described above with respect to diagram 300 and FIG. 3A are scheduled to be performed in time slot 1, during time period T1. The sequencing of the operations, including the processing of control units 1-9 may be performed from the top portion of diagram 310 in a generally downward direction, as illustratively indicated by arrow 304. When possible to do so, one or more of the control units 1-9 may be performed in parallel, for example the inputting of data from input module 1 and input module 2, as illustratively represented by having these two elements located at the top of the S1 dashed line. With the data input from the first input module 1 and the second input module 2 completed, control units 1, 2, 5, 8, 3, and 9 perform task processing as shown, as the inputs needed for the respective processing being performed by each of the control units becomes available. At some point during time period T1, control unit 9 generates and outputs the second control output module 2, while control units 6, 7, and 4 continue to process outputs originating from control unit 3 in order to generate and output the first output module 1, all within time period T1.

The capability of performing all of the tasks and generating the required output module all within time period T1 may be arranged by allocating controller resources using the algorithm and based on the distribution criteria as described herein. Such an arrangement may be useful for example wherein the generation of the first output module 1 and the second output module 2 must be performed and provided within a particular time latency restriction, for example with a time period no longer than 100 milliseconds, as set for time period T1. By arranging the controller resources using the algorithm and distribution criteria as described herein, the distribution of the control units can be configured as shown in diagram 310 to assure that output module 1 and output module 2 can completed within the required time limits. This capability can become extremely important for example in instances were the first output module 1 and the second output module 2 must be generated repeatedly at the required rate on a continuous basis. For example, as shown in FIG. 3B, the generation of the first output module 1 and the second output module 2 could be repeated in each of the time slots S2-S 10, as illustrative represented by arrows 308, wherein each of the time period remain fixed at the same length of time as T1. This capability to provide rapid regeneration of updated outputs for output module 1 and output module 2 may be valuable, and even required, for example for process control wherein the results from output module 1 and output module 2 include closed loop feedback data related to quality control of continuous manufacturing operations, such as sheet metal and/or paper mill production/processing operations.

In various embodiments, the allocated time period, for example 100 milliseconds, for time periods T1-T10 may not be long enough to complete the processing of both the first output module1 and the second output module 2 within a single time slot at the predefined time period. Embodiments of the algorithm may be configured to propose solutions that can still meet the requirements for processing tasks, and in some embodiments allow a user, such as a technician, to choose between proposed options. For example, the algorithm may be configured to determine what amount of increase in the time period allocated for time periods T1-T10 would be needed to still allow all of the processing needed to generate both the first output module 1 and the second output module 2 in a single time slot. Embodiments of the algorithm may also be configured to suggest moving some or all of the processing related to one or more of the tasks to one or more different time slots, and based on computer resources, the above described criteria, including latency requirements, still provides the required outputs within the respective required time frames or rates.

FIG. 3C is an illustrative diagram 320 of the allocation of a plurality of control units to multiple time slots, in accordance with various embodiments. Diagram 320, includes the same sequence of time frames, represented by vertical dashed lines, and indicated a time slots S1-S10, and arranged sequentially in time as illustratively represented by arrow 306, starting at time slot S1 and extending to time slot S10. In a manner similar to that of diagram 310 (FIG. 3B), each of time slots S1-S10 are separated from one another by a respective one of time periods T1-T9 along horizontal axis 306, and wherein the sequencing of the tasks may be performed from the top portion of diagram 320 in a generally downward direction, as illustratively indicated by arrow 304, in a manner similar to that as illustrated in FIG. 3B.

Referring back to FIG. 3C, as shown in diagram 320 the same control units 1-8 required to generate the first output module 1 and the second output module 2 are now spread out over the entirety of time slots S1-S10, with no more than two processes or control units are distributed in any one of time periods T1-T10. As show in diagram 320:
- The processing associated with input module 1 and input module 2 are performed at slot S1 during time period T1;
- The processing associated with control unit 1 is performed at time slot S2 during time period T2;
- The processing associated with control unit 2 is performed at time slot S3 during time period T3;
- The processing associated with control unit 5 is performed at time slot S4 during time period T4;
- The processing associated with control unit 8 are performed at time slot S5 during time period T5;
- The processing associated with control unit 3 are performed at time slot S6 during time period T6;
- The processing associated with control unit 9 and output module 2 are performed at time slot S7 during time period T7;
- The processing associated with control unit 6 is performed at time slot S8 during time period T8;
- The processing associated with control unit 7 is performed at time slot S9 during time period T9; and
- The processing associated with control unit 4 and the outputting of output module 1 are performed at time slot S10 during time period T10.

A distribution of control units as shown in diagram 320 may be helpful in a scenario where the process control system is heavily loaded and/or if there is a need to additionally accommodate the above controls units to provide output module 1 and output module 2, but a shorter latency for generating these outputs is not necessarily a top priority. By spreading out the distribution of the processing tasks over several time periods, the computer resources during any given one of time slots S1-S10 may be better allocated to processing have more urgency and/or of a higher priority. Examples of scenarios where the distribution of processing tasks as illustrated in diagram 320 might be utilized may be for example the generation of reports, such as end of shift production reports, that are not time critical with respect to immediate and/or real time feedback for ongoing processes being performed by the process control system.

FIG. 3D is an illustrative diagram 320 of the allocation of a plurality of control units to multiple time slots, in accordance with various embodiments. Diagram 330 includes the same sequence of time frames, represented by vertical dashed lines, and indicated a time slots S1-S10, and arranged sequentially in time as illustratively rearrested by arrow 306, starting at time slot S1 and extending to time slot S10. In a manner similar to that of diagram 310 (FIG. 3B), each of time slots S1-S9 are separated from one another by a respective one of time periods T1-T9 along the horizontal axis of the diagram, and wherein the sequencing of the tasks may be performed from the top portion of diagram 330 in a generally downward direction, as illustratively indicated by arrow 304, in a manner similar to that as illustrated in FIG. 3B.

Referring back to FIG. 3D, as shown in diagram 330 the same control units 1-8 required to generate the first output module 1 and the second output module 2 are now spread out over just thee time slots, namely time slots S1-S3. In this embodiment, consider there is hard latency need of 200 milliseconds, the slot duration for time periods T1 and T2 have been adjust to 50 milliseconds, and time slots S2 and S3 are relatively free from other distributed processing operations. As show in diagram 330:
- The processing associated with input module 1 and input module 2 are performed at slot S1 during time period T1;
- The processing associated with control units 1, 2, 5, 8, and 3 are performed at time slot S2 during time period T2; and
- The processing associated with control units 9, 6, 7, and 4, along with the generation of output module 1 and output module 2, are performed at time slot S3 during time period T3.

As a result of this distribution, output module 1 and output module 2 are generated within the 300 millisecond latency period, while still potentially allowing some additional computer resources to be utilized during one or more of time periods T1-T3 for other processing operations. Further, if the processing needed to generated output module 1 and output module 2 needs to be repeated on an iterative basis, the processing schedule as shown for S1-S3 and time periods T1-T3 could be again allocate for time slots S4-S6 and time periods T4-T6, as illustratively represented by arrows 338. Further, distribution of these same processing tasks could be repeated for subsequent sets of time slots as needed.

A distribution of control units as shown in diagram 330 may be helpful in a scenario where the process control system is not heavily loaded, but there is still a need to provide processing, for example to generate outputs such as output module 1 and output module 2, within a time latency restriction for providing these outputs. By spreading out the distribution of the processing tasks over a plurality of time periods, the computer resources during any give one of time slots S1-S3, may be better allocated to processing having more urgency and/or of higher priority.

Examples of scenarios where the distribution of processing tasks as illustrate in diagram 330 would be utilized may be for example the generation outputs that are still time critical, but can be assigned a longer latency time requirement compared to other processing tasks being performed by the process control system.

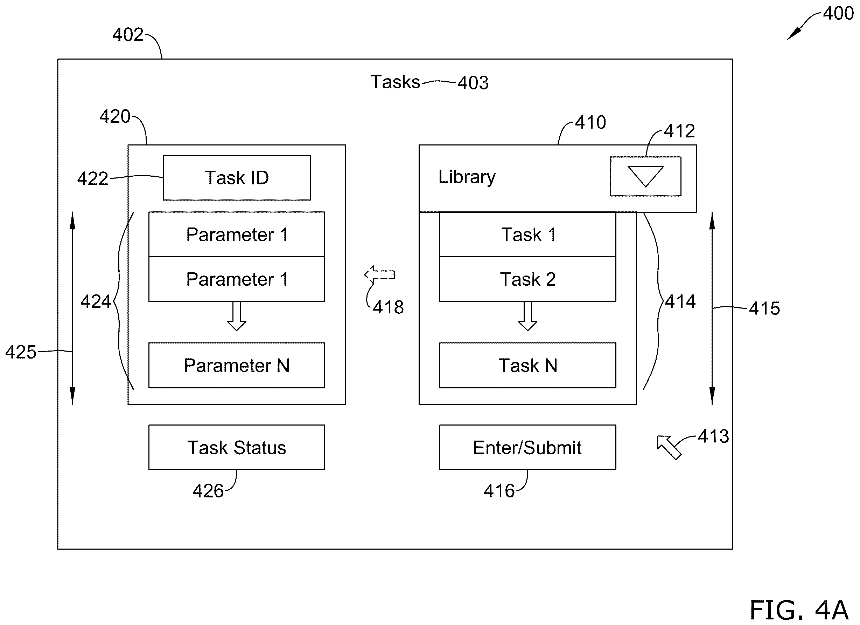

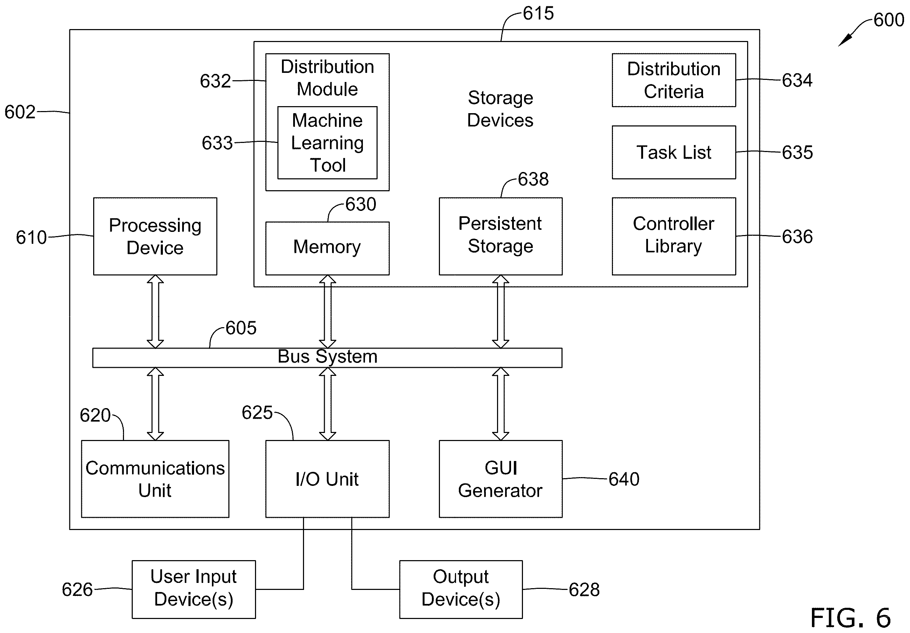

FIG. 4A illustrates a diagram 400 of an interactive graphical user interface 402, in accordance with various embodiments. Graphical user interface (GUI) 402 may be generated by a graphical user interface generator, such as GUI generator 640 (FIG. 6), and displayed on a display device, such as a computer monitor included as part of output devices 628 (FIG. 6), which may be configure as a touch screen. In various embodiments, GUI 402 incorporates use of an indicator graphic, such as cursor 413, which may be displayed as part of GUI 402 and which may be manipulated by a user, such as a technician, using another input device, such as a computer mouse, or by use of display device 402 having touch screen capability, to actuate various features available though the interaction with the graphical display elements being provided by GUI 402.

As shown in FIG. 4A, GUI 402 includes a header 403 labeled "TASKS," indicating that the graphical elements being displayed relate to tasks that are either presently programed and/or are to be added to the process control system associated with GUI 402. GUI 402 includes a library text box 410 that is linked to a pull down menu actuated by actuation of the graphical pull down arrow 412. When actuated, for example using cursor 413, a pulldown listing of tasks, generally indicated by bracket 414, appears in GUI 402 below the library text box 410. Each task appearing in the task list may be associated with a task identifier, such as but not limited to a task number or a nickname. As shown in FIG. 4A, the task list includes Task 1, Task 2, and Task N, representing that the number of tasks that may be included in the task list is not limited to any particular number of tasks, and may include all task that are presently programmed into the process control system associated with GUI 402. In various embodiments, an actuatable scroll graphic 415 may be provided as part of GUI 402 to allow for scrolling of the list of tasks being displayed at any given time.

In various embodiments, any one of the tasks being displayed as part of the task list provide in GUI 402 may be selected, for example using cursor 413, and dragged over to task box 420, as illustratively represented by dashed arrow 418. Once a selected task is present in the task box 420, GUI 402 includes a task ID box 422 that indicates some identification information associated with that particular task, such as a task ID number and/or a task name. In addition, GUI 402 may be configured to display one or more parameters, generally indicated by bracket 424, in an area with the task box 420. Parameters are not limited to any particular type or number of parameters, and may include parameters such as latency, computational load values, and any other information that might be associated with the particular task present in the task box 420. In various embodiments, a actuatable scroll graphic 425 may be provided as part of GUI 402 to allow for scrolling of the list of parameters being displayed at any given time.

In addition, a task status box 426 may be provide as part of GUI 402. The task status box 426 may provide information related to the task being identified in the task ID box 422. For example, information related to the task may include an indication as to whether the task is running or is not running at the present time, historical information about when the task has previously run, date information related to when the task was initially programmed and/or last updated, and a mapping to which controller(s) may be actively processing the programming provided by the task.

In various embodiments, a user such as a technician may interact for example with the parameter text boxes to update parameter information, or example by resetting or changing a parameter value, and alarm limits associated with one or more of the parameters, or any other aspects associated with the list of the parameters that effect the task. In various embodiments, a user such as a technician may also interact with the task status box 426, requesting additional information regarding the status of the task represented in the task box 420, and/or to alter or change a status of the task. For example the user may request that the task start running, or request that a task that is currently running stopping running. Once any parameters of a task have been altered, and/or when a status for the task has been made through user interactions with GUI 402, the enter/submit 416 box can be actuated to enter these changes into the controller system associated with GUI 402. Based on the submitted request, the algorithm can be configured to trigger a re-running of the algorithm, and to reconfigure the process control system based on the output control parameters determined by the algorithm and based on the distribution criteria as described above.

In various embodiments, the machine learning tool used by the algorithm for providing distribution of the control units may detect that the change(s) submitted for a task or tasks are not operable, for example that the parameters cannot be met, or for example the requested changes to the operational parameters of the task(s) would violate one or more safety rules or regulations, and/or cannot be meet using all the require controllers. In such instances, GUI 402 can be configured to generate and display one or more error messages, which may include an explanation of the issues with the requested changes, and may also provide one or more alternative solutions that comply with alternative configurations while best meeting the requirements for controlling the system based on the requested changes to the process control parameters of the system.

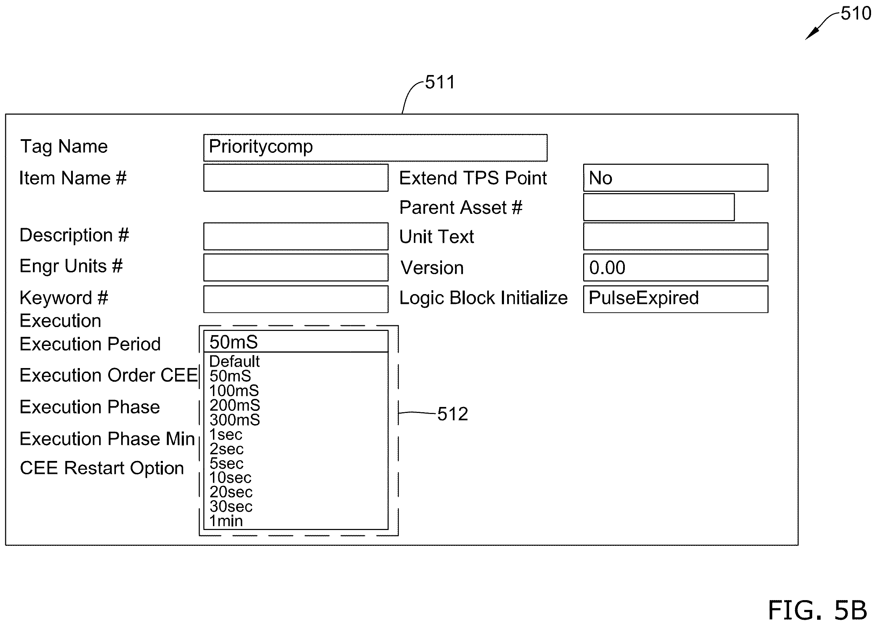

While displaying the "TASKS" GUI 402, a user such as a technician may select a parameter, for example using cursor 413, and move to another graphical display provided on the display device that displays information related to the selected parameter, and wherein the new graphic display may also be interactive to allow the user to select different values for the selected parameter. For example, selection of a parameter in task box 420 related to "execution period" may result in GUI 402 displaying an image 510 including graphical display 511 as illustrated in FIG. 5B. Display 511 includes an interactive menu 512 that is configure to allow a user to input a new time value for the execution time for time slots where the control units are allocated, as shown for example at interactive menu 512 in FIG. 5B. In various embodiments, a change in the execution period assigned to a task may result in triggering the algorithm configured to generate the distribution of control units to time slots to re-execute in view of the newly selected execution period, and to provide an output including a new distribution of control units based on the available computer resources of the process control system and based on distribution criteria, as described above.

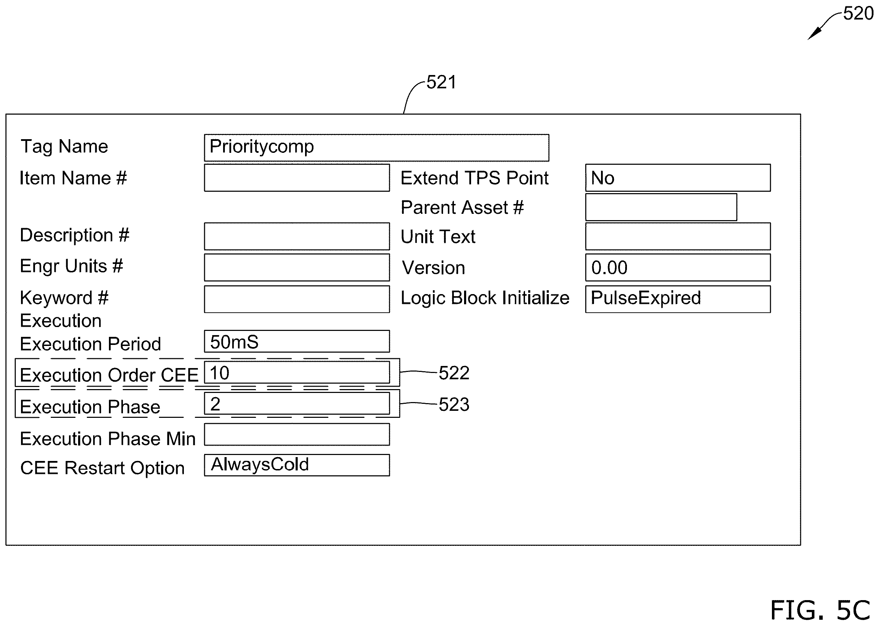

In another example, selection of a parameter in task box 420 related to "execution order" may result in GUI 402 displaying an image 520 including graphical display 521 as illustrated in FIG. 5C. Display 521 includes an interactive menu 522 that is configured to allow a user to input a new value for the execution sequence of a control unit. Display 521 may also include an interactive menu 523 that is configured to allow a user to input a new value for the execution phase of a control unit. In various embodiments, a change in the execution sequence and/or a change to the execution phase assigned to a task may result in triggering the algorithm configured to generate the distribution of control units to time slots to re-execute in view of the newly selected parameter value(s), and to provide an output including a new distribution of control units based on the available computer resources of the process control system and based on distribution criteria, as described above.

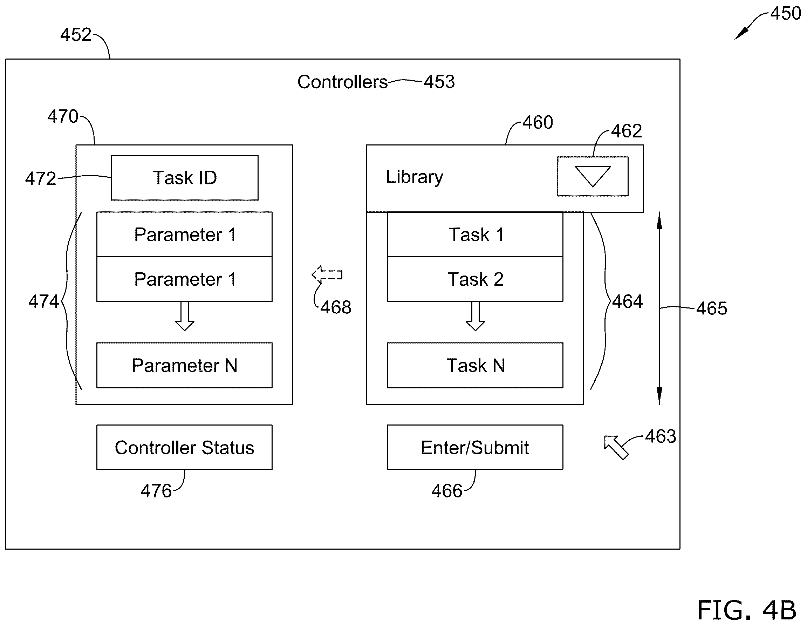

FIG. 4B illustrates a diagram 450 of an interactive graphical user interface 452, in accordance with various embodiments. Graphical user interface (GUI) 452 may be generated by a graphical user interface generator, such as GUI generator 640 (FIG. 6), and displayed on a display device, such as a computer monitor included as part of output devices 628 (FIG. 6), which may be configure as a touch screen. In various embodiments, GUI 452 incorporates use of an indicator graphic, such as cursor 463, which may be displayed as part of GUI 452 and which may be manipulated by a user, such as a technician, using another input device, such as a computer mouse, or by use of display device 452 having touch screen capability, to actuate various features available through the interaction with the graphical display elements being provided by GUI 452.

As shown in FIG. 4B, GUI 452 includes a header 453 labeled "CONTROLLERS," indicating that the graphical elements being displayed relate to controllers that are either presently part of the process control system associated with GUI 452, and/or are to be added to the process control system associated with GUI 452. GUI 452 includes a library text box 460 that is linked to a pull down menu actuated by actuation of the graphical pull down arrow 462. When actuated, for example using cursor 463, a pulldown listing of controllers included in the process control system, generally indicated by bracket 464, appears in GUI 452 below the library text box 460. Each controller appearing in the controller list may be associated with a controller identifier, such as but not limited to a controller number or a nickname. As shown in FIG. 4B, the controller list includes CTRL 1, CTRL 2, and CTRY N, representing that the number of controllers that may be included in the controller list is not limited to any particular number of controllers, and may include all controllers that are presently incorpored into the control system associated with GUI 462, and/or controllers that are to be added to the control system associated with GUI 462. In various embodiments, a actuatable scroll graphic 465 may be provided as part of GUI 452 to allow for scrolling of the list of controllers being displayed at any given time.

In various embodiments, any one of the controllers being displayed as part of the controllers list provide in GUI 452 may be selected, for example using cursor 463, and dragged over to the controller box 470, as illustratively represented by dashed arrow 468. Once a selected controller is present in the controller box 470, GUI 452 includes a controller ID box 472 that indicates some identification information associated with that particular controller, such as a controller ID number and/or a controller name. In addition, GUI 452 may be configured to display one or more parameters, generally indicated by bracket 474, in an area with the controller box 470. Parameters are not limited to any particular type or number of parameters, and may include parameters such as CPU processing capacity of the controller, current CPU load values, and/or any other information that might be associated with the particular controller present in the controller box 470. In various embodiments, a actuatable scroll graphic 475 may be provided as part of GUI 452 to allow for scrolling of the list of parameters being displayed at any given time.

In addition, a controller status box 476 may be provided as part of GUI 452. The controller status box 476 may provide information related to the controller being identified in the controller ID box 472. For example, information related to the controller may include an indication as to whether the controller is running or is not running at the present time, historical information about when the controller has previously run, date information related to when the controller was initially put on-line, whether the controller is a single controller or a paired controller acting as a primary controllers or a secondary controllers, if the controllers has experienced and controller failures, and any other information that might be deemed relevant to the operation of the controller or to the controller itself, such as model and serial number information.

In various embodiments, a user such as a technician, may interact for example with the parameter text boxes to update parameter information, or example by resetting or changing a parameter value, and alarm limits associated with one or more of the parameters, or any other aspects associated with list of the parameters that effect the controller. In various embodiments, a user such as a technician may also interact with the controller status box 476, requesting additional information regarding the status of the controller represented in the controller box 470, and/or to alter or change a status of the controller,. For example the user may request that the controller be taken off line, or be put back on line.. Once any parameters of a controller have been altered, and/or when a status request regarding the controller has been made through user interactions with GUI 452, the enter/submit 476 box can be actuated to request entry of these changes into the controller system associated with GUI 452. Based on the submitted request, the algorithm can be configured to re-run the algorithm, and to reconfigure the process control system based on the output control parameters determined by the algorithm and based on the distribution criteria as described above.

In various embodiments, the machine learning tool used by the algorithm for providing distribution of the control units may detect that the change submitted for a controller or for a group of controller is/are not operable, for example the parameters cannot be met, or for example the request changes to the operational parameters of the controller(s) would violate one or more safety rules or regulations, and/or cannot be meet using all the required controllers. In such instances, GUI 452 can be configured to generate and display one or more error messages, which may include an explanation of the issues with the requested changes, and may also provide one or more alternative solutions that comply with alternative configurations while best meeting the requirements of for controlling the system based on the required process control parameters of the system.

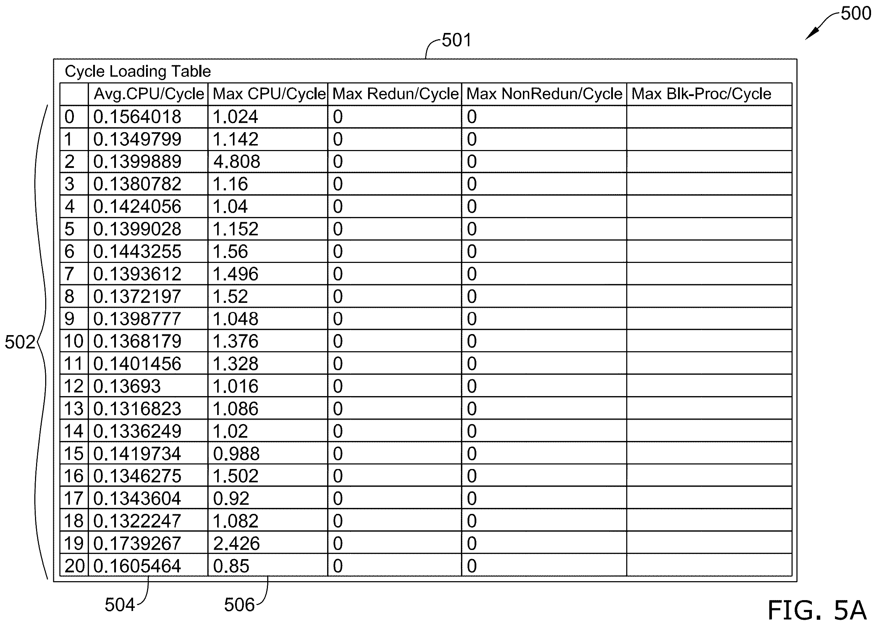

While displaying the "CONTROLLERS" GUI 452, a user such as a technician may select a parameter, for example using cursor 463, and move to another graphical display provided on the display device that displays information related to the selected parameter, and wherein the new graphic display may also be interactive to allow the user to select different values for the selected parameter. For example, selection of a parameter in task box 470 related to "CPU Loads" may result in GUI 452 displaying an image 500 including graphical display 501 as illustrated in FIG. 5A. Display 501 includes an interactive menu 502 that is configure to allow a user to review "average CPU used per cycle" information provided in column 504, and "Max CPU used per cycle" information provided in column 506 for a controller.

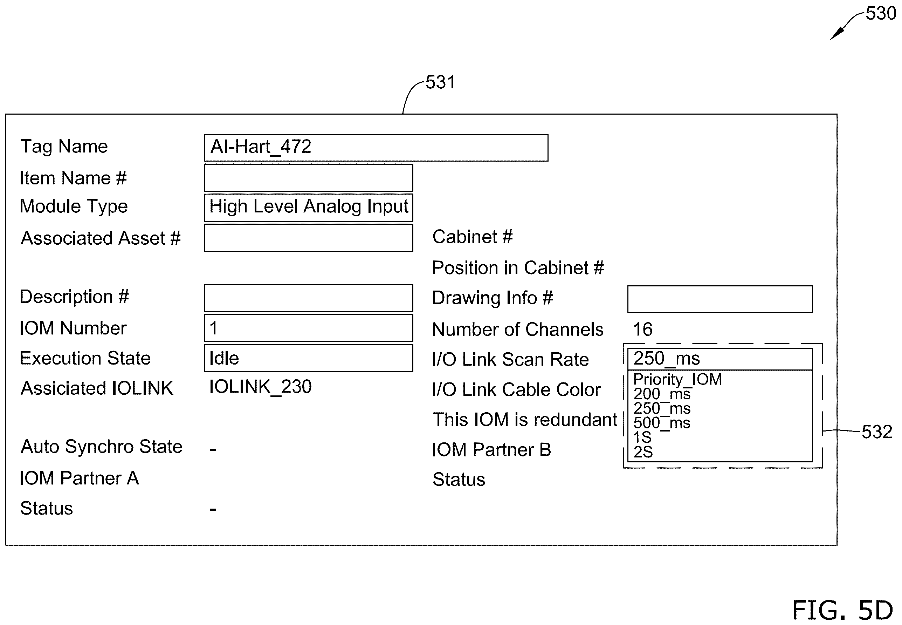

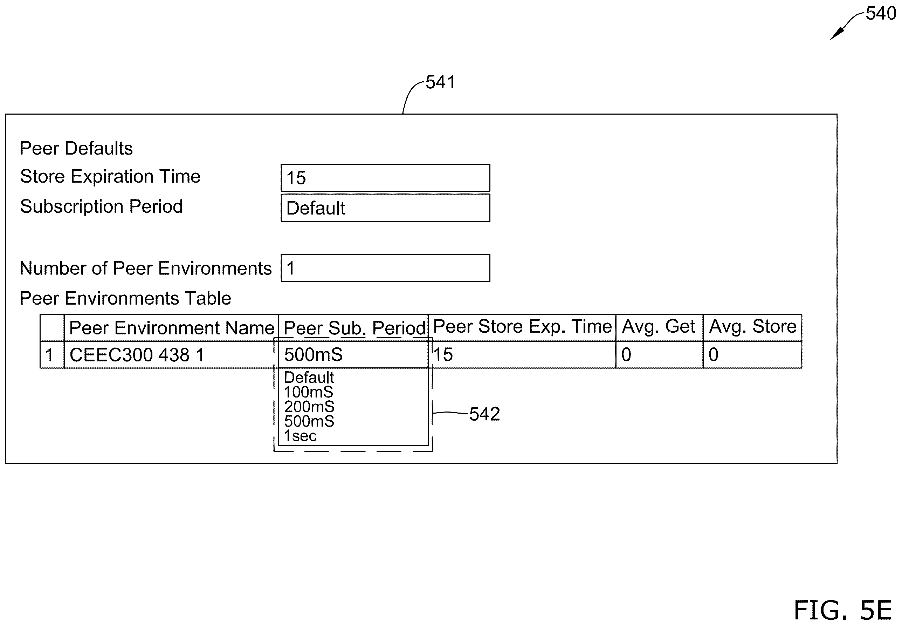

In another example and referring back to FIG. 4B, a selection of a parameter in controller box 470 may result in GUI 452 displaying a graphical image 530 as shown in FIG. 5D, or displaying a graphical image 540 as shown in FIG. 5E. Graphical image 530, (FIG. 5D), includes a graphical depiction 531 that includes an interactive menu 532 related to input/output scan rates, which can be viewed and selected from interactive menu 532. Graphical image 540, (FIG. 5E), includes a graphical depiction 541 that includes an interactive menu 542 related to the peer subscription period between controller, which can be viewed and selected from the interactive menu 542.

In various embodiments, a request for any changes to the parameters associated with the controllers may be submitted by actuation of the enter/submit box 466 in FIG. 4B, wherein the submission of a requested change regarding the controller(s) may result in triggering the algorithm configured to generate the distribution of control units to time slots to re-execute in view of the newly selected parameter value(s), and to provide an output including a new distribution of control units based on the available computer resources of the process control system and based on distribution criteria, as described above.

In a manner similar to that described above with respect to tasks, in various embodiments the machine learning tool used by the algorithm for providing distribution of the control units may detect that the change(s) submitted for a controller or a group of controllers are not operable, for example that the parameters cannot be met, or for example the requested changes to the operational parameters of the controller(s) would violate one or more safety rules or regulations, and/or cannot be meet using all the require controllers. In such instances, GUI 452 can be configured to generate and display one or more error messages, which may include an explanation of the issues with the requested changes, and may also provide one or more alternative solutions that comply with alternative configurations while best meeting the requirements for controlling the system based on the requested changes to the process control parameters of the system.

FIG. 6 illustrates a block diagram 600 depicting an example computer system 602, in accordance with various embodiments. Computer system 602 may be configured to provide any of the features and to perform any of the functions described in this disclosure related to the distribution of control units allocated into time slots using machine learning tools and based on the distribution criteria, as described above. In some embodiments, computer system 602 is included or incorporated into server 180 (FIG. 1), and is configured to perform any of the functions and provide any of the features ascribed and/or attributable to server 180.

Referring back to FIG. 6, computer system 602 includes processing device 610 (possibly including multiple processors, multiple cores, multiple nodes, and/or implementing multi-threading, etc.), communicatively coupled to one or more storage devices 615 by a bus system 605. Example types of processing devices 610 include microprocessors, microcontrollers, digital signal processors, field programmable gate arrays, application specific integrated circuits, and discreet circuitry.

As shown in FIG. 6, storage devices 615 includes memory 630 and persistent storage 638. Memory 630 and persistent storage 638 are examples of storage devices that represent any structure(s) capable of storing and facilitating retrieval of information (such as data, program code, and/or other suitable information on a temporary or permanent basis). Memory 630 may represent a random access memory or any other suitable volatile or non-volatile storage device(s). Persistent storage 638 may contain one or more components or devices supporting longer-term storage of data, such as a ready only memory, hard drive, Flash memory, or optical disc.

Storage devices 615 include additional data and software modules that may be executed by processing device 610 to provide any of the features and to perform any of the functions ascribed to the generation and output of a distribution of control units to time slots based on computer resources and distribution criteria associated with a process control system. As shown in FIG. 6, storage device 615 includes distribution module 632 including machine learning tool 633, a rule-based set of distribution criteria 634, a task list 635, and a controller library 636. In various embodiments, task list 635 including a list of tasks that are and/or will need processing as part of the operation of a process control system, such as system 100 (FIG. 1), and wherein the controller library 636 includes data related to computational resources available through the controllers included in the process control system, again such as system 100 (FIG. 1).

Distribution module 632 including programming, may be executed by processing device 610, using machine learning tool 633, in order to allocate a set of control units that must be processed in order to complete the tasks included in task list 635, to computational time slots for processing by the controllers included in the process control system, the allocation based on the availability of computer resources provided by the controllers so that process control system and based on the distribution criteria 634. In various embodiments, machine learning tool 633 may be configured as one or more neural networks configured to process the data, as described above, to generate the allocation schedule of the control units to the computational time slots based on the distribution criteria. Processing device 610 may be configured to execute any instructions stored in and/or provided by distribution module 632, machine learning tool 633, memory 630, persistent storage 638, distribution criteria 634, task list 635 and controller library 636, and GUI generator 640, along with and/or based on any data stored in any of these same devices.

As shown in FIG. 6, computer system also includes communications unit 620, I/O unit 625, and a graphical user interface (GUI) generator 640, each of which is communicatively coupled to bus system 605, and therefore to one another and to processing device 610 and storage devices 615. The computer system 602 can communicate via transmissions to and/or from remote devices via the network interface 620 in accordance with a network protocol corresponding to the type of network interface, whether wired or wireless and depending upon the carrying medium. In addition, a communication or transmission can involve other layers of a communication protocol and or communication protocol suites (e.g., transmission control protocol, Internet Protocol, user datagram protocol, virtual private network protocols, etc.). In addition, communications unit 620 may be configured to communicate the allocation of control units to time slots, as generated by distribution module 632, to the controllers that are included in a process control system, such as processors 111, 112, 121, 122, and 130, (system 100, FIG. 1), so that the controllers can process the control units based on the time slot allocations communicated from communications unit 620.

I/O unit 625 may be configured to operate as an interface for providing communicative coupling between computer system 602 with one or more user input devices 626 and one or more output devices 628. User input devices 626 may include one or more devices such as a computer mouse, computer keyboard, voice recognition hardware and software, and/or other devices such as a touch screen, that allow a user to provide inputs to computer system 602. Output devices 628 may include one or more devices, such as a computer monitor and/ speaker(s), which are configured to provide output information, such as visual graphical displays and/or sounds, perceivable by a user, such as a process control engineer or a technician. Output devices 628 may include other types of output devices, such as a printer. In various embodiments, the input devices 626 may be used to input information, such as controller configurations, and other parameters related to the operation of the process control system, such as system 100 (FIG. 1), for example as illustrated and described with respect to FIGS. 4A and 4B above, which are related to tasks and to controller for use in the operation of the process control system. In various embodiments, GUI generator 640 is configured to generate graphical information, such as task lists, controller information, and graphical depictions illustrative of the time slot allocations determined by the distribution module 632, non-limiting examples of which are illustrated and described above with respect to FIGS. 3B-3D. The graphical information and depictions generated by GUI 640 may be displayed for example on a monitor or display provided as part of output devices 628 for use by a user, such as a process control engineer or technician. GUI generator 640 may also be configured to modify the graphical depictions being provided on a monitor or display based on user inputs received through the use of one or more input devices 626, for example as also described above with respect to the interactive displays of FIGS. 4A-4B and 5B-5E.

Any one of the previously described functionalities may be partially (or entirely) implemented in hardware and/or on the processing device 610. For example, the functionality may be implemented with an application specific integrated circuit, in logic implemented in the processing device 610, in a co-processor on a peripheral device or card, etc. Further, realizations may include fewer or additional components not illustrated in FIG. 6 (e.g., video cards, audio cards, additional network interfaces, peripheral devices, etc.). Although illustrated as being coupled to the bus 603, one or more of the memory and storage devices including in storage devices 615 may be coupled directly to the processing device 610.

Although FIG. 6 illustrates one example of a computer system 600 supporting industrial process control and automation systems, variations in the configuration of computer system 600 are possible. For example, various components in computer system 600 could be combined, further subdivided, or omitted and additional components could be added according to particular needs. Also, computing devices can come in a wide variety of configurations, and the configuration of computer system 600 as illustrated in FIG. 6 does not limit this disclosure to any particular configuration of computing device.

While the aspects of the disclosure are described with reference to various implementations and exploitations, it will be understood that these aspects are illustrative and that the scope of the claims is not limited to them. In general, techniques for measuring magnetic susceptibility of cuttings as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the disclosure. In general, structures and functionality presented as separate components in the example configurations may be implemented as a combined structure or component. Similarly, structures and functionality presented as a single component may be implemented as separate components. These and other variations, modifications, additions, and improvements may fall within the scope of the disclosure.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. §112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element" , "member," "apparatus", "machine," "system," "processor," or "controller" within a claim is understood and intended to refer to structures known to those skilled in the relevant art, as further modified or enhanced by the features of the claims themselves, and is not intended to invoke 35 U.S.C. §112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method for executing a control unit distribution algorithm, the method comprising:
determining a list of tasks to be performed by a plurality of controllers included in a process control system;
for each of the tasks included in the list of tasks, determine a set of control units associated with performing the task; and
allocating each of the control units to one or more computational time slots based on a computational weighting of each of the control units and a set of distribution criteria to generate a time slot distribution schedule for each of the control units.

2. The method of claim 1, further comprising:
communicating to the plurality of controllers the time slot distribution schedule; and
configuring the plurality of controllers to operate the process control system using the allocation of the time slot distribution schedule.

3. The method of either of claims 1 or 2, wherein at least one of the set of distribution criteria comprises a cascade data flow requirement that exists between two or more controllers of the process control system.

4. The method of any preceding claim, wherein at least one of the set of distribution criteria comprises a priority of data flow criteria.

5. The method of any preceding claim, wherein at least one of the set of distribution criteria comprises the central processing unit (CPU) resource needs of each controller in the process control system.

6. The method of any preceding claim, wherein at least one of the set of distribution criteria comprises at least one of:
one or more latency restrictions for generating output modules;
an input/output subscription rate; and/or
a redundancy traffic and watermark level.

7. The method of any preceding claim, wherein the computational weighting of each of the control units comprises, for each of the control units individually, determining a value for the computer resource time needed to perform the control unit.

8. The method of any preceding claim, wherein allocating each of the control units to one or more computational time slots further comprises allocating each of the control units to the one or more computation time slots so that all latency requirements are met for performing each of the tasks included in the list of tasks to be performed by a plurality of controllers.

9. An apparatus comprising a computer system comprising a processor configured to execute a control unit distribution algorithm, the control unit distribution algorithm, when executed by the processor, being configured to:
determine a list of tasks to be performed by a plurality of controllers included in a process control system;
for each of the tasks included in the list of tasks, determine a set of control units associated with performing the task; and
allocate each of the control units to one or more computational time slots based on a computational weighting of each of the control units and a set of distribution criteria.

10. The apparatus of claim 9, wherein at least one of the set of distribution criteria comprises a cascade data flow requirement that exists between two or more controllers of the process control system.

11. The apparatus of either of claims 9 or 10, wherein at least one of the set of distribution criteria comprises a priority of data flow criteria.

12. The apparatus of claim any of claims 9-11, wherein at least one of the set of distribution criteria comprises the central processing unit (CPU) resource needs of each controller in the process control system.

13. The apparatus of any of claims 9-12, wherein at least one of the set of distribution criteria comprises latency restrictions for generating output modules.

14. The apparatus of any of claims 9-13, wherein at least one of the set of distribution criteria comprises an input/output subscription rate or a redundancy traffic and watermark level.

15. The apparatus of any of claims 9-14, wherein the processor is further configured to control the operation of a communications unit to cause the communications unit to communicate, to the plurality of controllers, the time slot distribution schedule, wherein the time slot distribution schedule is configured to control the processing of the control units as performed by the plurality of controllers based on time slot distribution schedule.
